(19) **Europäisches Patentamt**

**European Patent Office**

**Office européen des brevets**

(11) **EP 1 252 731 B1**

(12) **EUROPEAN PATENT SPECIFICATION**

(45) Date of publication and mention
of the grant of the patent:
**28.07.2004 Bulletin 2004/31**

(51) Int Cl.[7]: **H04B 17/00**, H04B 7/005, H04L 12/56

(21) Application number: **01911485.9**

(86) International application number:
**PCT/EP2001/000413**

(22) Date of filing: **15.01.2001**

(87) International publication number:
**WO 2001/054299 (26.07.2001 Gazette 2001/30)**

(54) **A PACKET SCHEDULER AND METHOD THEREFOR**

PAKETENABLAUFSTEUERUNG UND VERFAHREN DAFÜR

PROGRAMMATEUR DE PAQUETS ET PROCEDE CORRESPONDANT

(84) Designated Contracting States:
**AT BE CH CY DE DK ES FI FR GB GR IE IT LI LU MC NL PT SE TR**

(30) Priority: **19.01.2000 GB 0001214**

(43) Date of publication of application:
**30.10.2002 Bulletin 2002/44**

(73) Proprietor: **Motorola Limited
Basingstoke, Hampshire RG22 4PD (GB)**

(72) Inventors:
• **HILL, Stephen
Swindon Wiltshire SN1 2EQ (GB)**
• **LEGG, Peter
Swindon Wiltshire SN4 0RP (GB)**

• **BARRETT, Stephen
Winchester Hampshire SO21 3HY (GB)**
• **VILLIER, Eric
Swindon Wiltshire SN2 3WG (GB)**
• **CUDAK, Mark
McHenery, IL 60050 (US)**

(74) Representative: **McCormack, Derek James et al
Motorola
European Intellectual Property Operations
Midpoint
Alencon Link
Basingstoke Hampshire RG21 7PL (GB)**

(56) References cited:
**EP-A- 1 077 534          WO-A-99/41918
US-A- 5 914 950**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 1 252 731 B1**

**Description**

**Field of the Invention**

This invention relates to a packet scheduler and method therefor, and in particular to a packet scheduler for a cellular communication system for mobile communication.

**Background of the Invention**

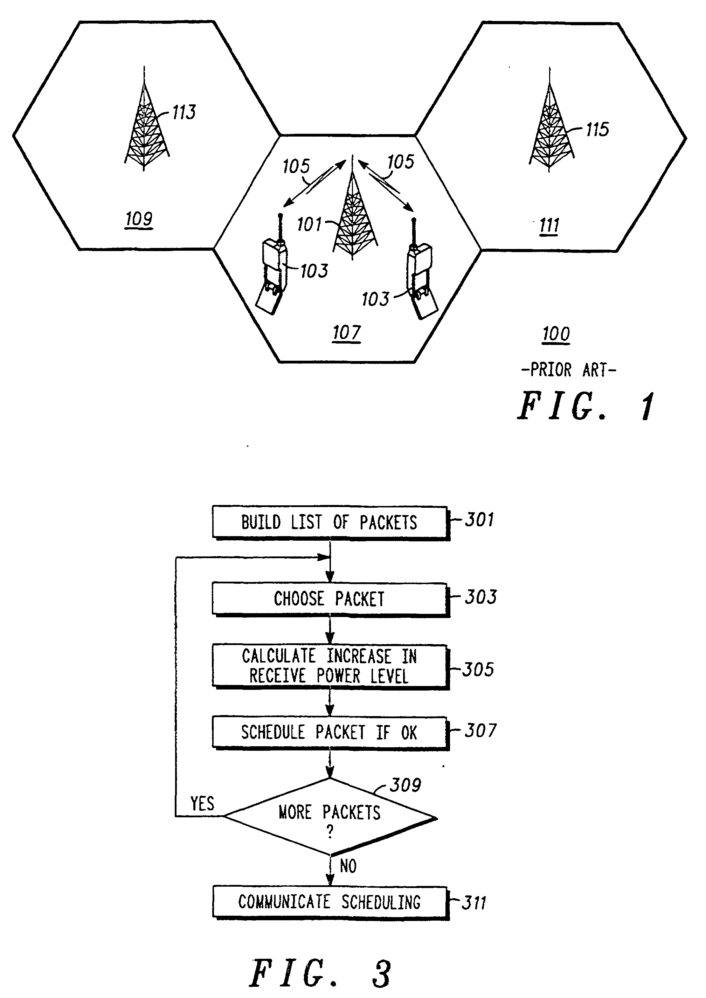

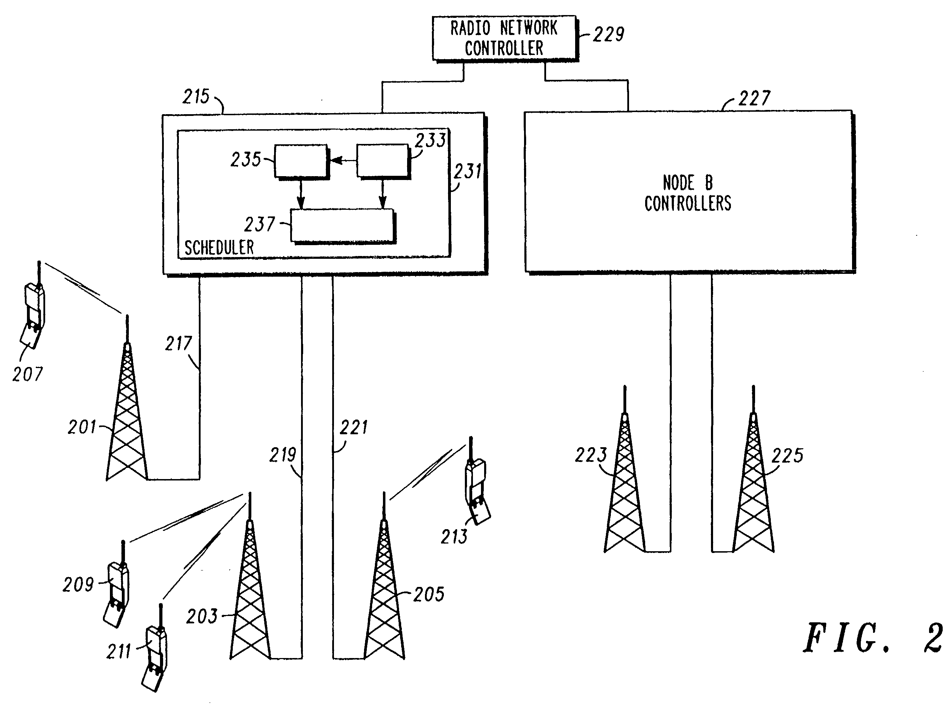

In a cellular communication system each of the remote terminals (typically mobile stations) communicates with typically a fixed base station. Communication from the remote terminal to the base station is known as uplink and communication from the base station to the remote terminal is known as downlink. The total coverage area of the system is divided into a number of separate cells, each predominantly covered by a single base station. The cells are typically geographically distinct with an overlapping coverage area with neighbouring cells. FIG. 1 illustrates a cellular communication system 100. In the system, a base station 101 communicates with a number of remote terminals 103 over radio channels 105. In the cellular system, the base station 101 covers users within a certain geographical area 107, whereas other geographical areas 109, 111 are covered by other base stations 113, 115.

As a remote terminal moves from the coverage area of one cell to the coverage area of another cell, the communication link will change from being between the remote terminal and the base station of the first cell, to being between the remote terminal and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a remote terminal is routed through the fixed network to the destination specific for this call. If the call is between two remote terminals of the same communication system the call will be routed through the fixed network to the base station of the cell in which the other remote terminal currently is. A connection is thus established between the two serving cells through the fixed network. Alternatively, if the call is between a remote terminal and a telephone connected to the Public Switched Telephone Network (PSTN) the call is routed from the serving base station to the interface between the cellular mobile communication system and the PSTN. It is then routed from the interface to the telephone by the PSTN.

A cellular mobile communication system is allocated a frequency spectrum for the radio communication between the remote terminals and the base stations. This spectrum must be shared between all remote terminals simultaneously using the system.

One method of sharing this spectrum is by a technique known as Code Division Multiple Access (CDMA). In a Direct Sequence CDMA (DS-CDMA) communication system, the signals are prior to being transmitted multiplied by a high rate code whereby the signal is spread over a larger frequency spectrum. A narrowband signal is thus spread and transmitted as a wideband signal. At the receiver the original narrowband signal is regenerated by multiplication of the received signal with the same code. A signal spread by use of a different code will at the receiver not be despread but will remain a wide band signal. In the receiver the majority of interference caused by interfering signals received in the same frequency spectrum as the wanted signal can thus be removed by filtering. Consequently a plurality of remote terminals can be accommodated in the same wideband spectrum by allocating different codes for different remote terminals. Codes are chosen to minimise the interference caused between remote terminals typically by choosing orthogonal codes when possible. A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 standardised in North America and the Universal Mobile Telecommunication System (UMTS) currently under standardisation in Europe.

Traditional traffic in mobile cellular communication systems has been circuit switched voice data where a permanent link is set up between the communicating parties. In the future it is envisaged that data communication will increase substantially and typically the requirements for a remote terminal to transmit data will not be continuous but will be at irregular intervals. Consequently it is inefficient to have a continuous link setup between users and instead a significant increase in packet based data traffic is expected, where the transmitting remote terminal seeks to transmit the data in discrete data packets when necessary. An example of a packet based system is General Packet Radio Service (GPRS) introduced to the Global System for Mobile communication (GSM). Further details on data packet systems can be found in 'Understanding data communications: from fundamentals to networking, 2nd ed.', John Wiley publishers, author Gilbert Held, 1997, ISBN 0-471-96820-X.

In a packet based system where a high number of remote terminals may require resources for packet transmissions at unknown and irregular intervals it is important for optimal utilisation of the limited resource to schedule the order and time for transmission of the individual packets. This becomes even more important when different data

2

packets have different requirements with respect to delay, bit error rate etc. Therefore most packet based systems contain schedulers which control when the individual data packets are transmitted and therefore share the available resource, whether time-slots in a TDMA system or power and codes in a CDMA system. An introduction to schedulers can be found in 'Service discipline for guaranteed performance service in packet-switching networks', Hui Zhang, Proceedings of the IEEE, volume 83, no. 10, October 1995.

However, known schedulers have been optimised for different environments than CDMA systems. For example, scheduling algorithms used for GPRS are optimised for a Time Division Multiple Access (TDMA) system and therefore not optimal for CDMA systems where codes and power must be shared.

**Summary of the Invention**

The inventors of the current invention have realised that conventional approaches for scheduling of data packets can be improved in a CDMA system by considering parameters specific to CDMA when scheduling.

Accordingly there is provided a packet scheduler for a Code Division Multiple Access cellular communication system having a number of cells each cell having a base station and at least one remote terminal, the scheduler comprising: means for maintaining a list of packets for a cluster of cells; means for calculating an increase in receive power level at a target base station and at other base stations caused by transmitting a packet; and means for scheduling packets to a base station so that only packets which do not result in an accumulated receive power level exceeding a maximum receive power level at a base station are scheduled.

By basing the scheduling on the increase in receive power level, the invention provides an improvement in the resource utilisation (the fraction of the available resource which is exploited by the scheduler whilst meeting the agreed quality of service for the supported circuit and packet connections) or capacity, whilst at the same time running at low complexity.

Preferably the means for calculating an increase in receive power level at base stations includes means for calculating the received power from the remote terminal from the required signal to noise ratio for the packet, the maximum receive power level and the path loss from the remote terminal to the target base station.

According to a different aspect of the invention there is provided a method of scheduling packets in a Code Division Multiple Access cellular communication system having a number of cells each cell having a base station and at least one remote terminal, the method comprising the steps of: maintaining a list of packets for a cluster of cells; calculating an increase in receive power level at a target base station and at other base stations caused by transmitting a packet; and scheduling packets to a base station so that only packets which do not result in an accumulated receive power level exceeding a maximum receive power level at a base station are scheduled.

**Brief Description of the Drawings**

An embodiment of the present invention is described below, by way of example only, with reference to the Drawings, in which:

FIG. 1 is an illustration of a cellular communication system according to prior art;

FIG. 2 is an illustration of an embodiment of a CDMA communication system in accordance with the invention;

FIG 3 illustrates a flow chart of a method of scheduling in accordance with an embodiment of the invention; and

FIG 4 illustrates the principle of scheduling of packets in accordance with an embodiment of the invention.

**Detailed Description of a Preferred Embodiment**

The following description focuses on an embodiment compliant with the current approach for the standardisation of UMTS but it will be apparent that the invention is not limited to this application.

FIG 2 shows a schematic diagram of an embodiment of a CDMA communication system in accordance with an embodiment of the invention. The communication system has a number of base stations 201-205 each covering a geographical area and thereby defining a cell. A number of remote terminals 207-213 are associated with the communication system and communicate to each other or to other systems via the base stations 201-205.

The base stations 201-205 are connected to a common controller 215 known as a Node B in UMTS, via communication links 217-221. Other base stations 223,225 are connected to other Node B controllers 227, and the Node B controllers are connected together through a Radio Network Controller (RNC) 229. The RNC further provides gateways to other communication systems such as the fixed public telephone system.

Each of the remote terminals 207-213 have independent communication needs and communicate by use of data packets. Alternatively some of the remote terminals 207-213 may communicate by use of circuit switched connections. The remote terminals 207-213 may require different services and can for example be Internet browsers, telephones or data terminals. Each remote terminal may also request different services at different times.

The resource requirement for each individual remote terminal 207-213 may vary significantly over time so that a remote terminal 207-213 may sometimes require no transmissions and at other times require long transmissions at high data rate. The resource requirement for each terminal from the communication system can thus vary significantly and in order to ensure that the available resource is used optimally an efficient scheduling of packets from the different remote terminals is required. This task is performed by the scheduler 231 here shown as part of the Node B controller 215. Another possibility is for the scheduler to be in a Radio Network Controller 229.

In CDMA the total data throughput is limited by the interference at the receiver caused by transmissions to other users. Since a single cell re-use of carrier frequency is employed interference may originate from connections within the same cell (intra-cell interference) or from adjacent cells (inter-cell interference). A successful sharing of the available power in a cell requires an accurate knowledge of these interference levels so that the signal to noise ratio for each connection is appropriate for the desired block error rate. In order to perform an optimal allocation remote terminals in all other cells of the communication system must therefore be taken into account and a scheduling of all packets in all cells must be done simultaneously. However, this will result in extremely high complexity of the scheduler and increase the load on communication lines between the scheduler and the base stations. Rather than have a single scheduler for an entire network, a scheduler is implemented for a cluster of cells. The size of this cluster will depend on the acceptable complexity of the scheduler, but can typically be in order of 100 cells. However, the cluster size is perceivable as anything from two cells to all cells of the communication system. The cells for each cluster are typically chosen so that a cluster covers a single geographical area.

The scheduler 231 comprise means 233 for maintaining a list of packets for a cluster of cells; means 235 for calculating the increase in receive power level at the serving base station and at other base stations caused by transmitting a packet; and means 237 for scheduling packets to a base station so that only packets which do not result in an accumulated receive power level exceeding a maximum receive power level at a base station are scheduled.

FIG 3 illustrates a flow chart of a method of scheduling 300 in accordance with an embodiment of the invention.

The scheduler schedules the packets for the entire cluster of cells and therefore a list of all transmission requirements for all the remote terminals served by cells in the cluster is maintained. In step 301 this list is build up. In a frame based communication system such as UMTS the communication is divided into discrete time intervals or frames and the communication resource is allocated in granularity of a single frame. In UMTS the packets to be transmitted in one time frame are scheduled and communicated to the remote terminals in the previous time frame. A remote terminal will transmit a request to the fixed network. The resource request includes the size of the queued packets together with Quality of Service related information, e.g., time of arrival, priority, bit error rate. This will be communicated to the scheduler, which will include the request in the list of packets to be scheduled.

In step 303 a packet is chosen from the list. Any method of choosing packets are appropriate including random selection, selecting the first received request or performing a prioritised selection in response to delay requirements, packet size or other parameters of the packet.

In step 305 the increase in receive power level at the target base station and at other base stations caused by transmitting the packet is calculated.

The increase in the receive power level at a base station is given by the transmit power used by the remote terminal divided by the path loss from the remote terminal to that base station. The transmit power and therefore the increase in receive level can be derived from the signal to noise requirement for a given packet. The transmit power can be calculated by assuming that the interference level at the receiving base station is at the maximum value i.e. that the receive power level at the base station is the maximum receive power level. This maximum receive power level is typically predetermined as described later. As the base station to which the packet is to be sent is not yet determined a target base station is used for this calculation. The target base station is typically the base station from which the strongest pilot signal is received. The required signal to noise ratio required is known and the received signal level can be calculated. The required transmit power of the remote terminal can be determined if the path loss is known and the interference caused to other base stations than the target base stations can be derived as the transmit power divided by the path loss to that base station.

The calculation is described in more detail in the following:

The signal to noise ratio for a user i transmitting a packet is given by

$$SNR_i = \frac{P_{tx,i} / L_i}{\sum_{j \neq i} P_{tx,j} / L_j + I_{intercluster} + N_{th}} \qquad (1)$$

where

$P_{tx,i}$ is the transmit power of user i

$L_i$ = path loss between user i and the base station

$I_{intercluster}$ = aggregate interference at the base station from users outside the cluster

$N_{th}$ = thermal noise power at the BTS receiver

It is assumed that the cells within the cluster are loaded in a fairly even manner and that typically more packets are queued in the mobiles than there is capacity in the uplink in a given frame. Thus a fair scheduling procedure over all cells will result in received power levels which are approximately equal at each base station. In this algorithm, we assume that the total received power at each base station at the end of the scheduling procedure will be identical, equal to a carefully chosen constant, $P_{max}$, although this need not be the case. Including the receiver noise floor $N_{th}$ within $P_{max}$, we can rearrange (1) to determine the received power at the BTS from user i:

$$P_{tx,i} / L_i = \frac{P_{max} \, SNR_i}{1 + SNR_i} \qquad (2)$$

and thus the increase in receive power at a base station from that terminal can be calculated from

$$P_{RECEIVE} = \frac{L}{L_B} \cdot P_{MAX} \cdot \frac{SNR}{1 + SNR}$$

where $P_{RECEIVE}$ is the received power level at the base station, L is the pathloss between the remote terminal and the target base station, $L_B$ is the pathloss between the remote terminal and the base station, $P_{MAX}$ is the maximum receive power level and SNR is the required signal to noise ratio for the packet.

The signal to noise ratio is known for a given service and if the path loss can determined the increase in receive power at a base station from supporting a packet at a given remote terminal can be calculated.

The path loss between a base station and a remote terminal and a base station can be determined from pilot measurement reports. Each mobile measures the strength of pilot transmissions from the strongest base station. These measurements are reported back to the scheduler together with information on the transmit power of the relevant base stations. The downlink path loss can consequently be calculated as the transmit power divided by the receive power strength. The uplink path loss is strongly correlated with the downlink path loss and the downlink path loss can be used as an estimate of the uplink path loss.

The increase in receive power is calculated for all cells affected by the transmission and as a result the impact of transmitting the packet to the interference of other base stations is determined.

In step 307, if the result of the calculation of the increase receive power is that the packet will not result in an accumulated receive power level exceeding a maximum receive power level at a base station (target base station or other base stations), it is scheduled to be transmitted in the following time frame.

The maximum receive power level used in the scheduling is in this embodiment the same as the interference level used in the calculation in step 305.

In step 307 the impact of scheduling the current packet is evaluated by adding the increase in receive power to all the base stations to the accumulated receive power level caused by transmission of the packets already calculated and scheduled. In addition the accumulated receive power level includes contributions from the intercluster interference, the thermal noise and interference caused by supporting circuit switched traffic such as for example voice communication. The resulting receive power level for all cells affected by transmission of the current packet is calculated and thus an accumulated receive power level for each cell is calculated. If the addition of the increase in receive power level from the current packet results in any of the accumulated receive power levels exceeding the predetermined maximum receive power level the packet is not scheduled but left in the list for consideration in the next frame. If the maximum receive power level is not exceeded the packet can be allocated without resulting in any interference levels rising above acceptable values.

The intercluster interference i.e. the interference contributed from remote terminals associated with base stations within the network but outside the cluster can be estimated from performed measurements or the schedulers of two neighbouring clusters can exchange the relevant information

The interference from circuit switched data can be estimated in different ways. The main circuit switched service is conventionally voice communication. Assuming an interference level equal to the maximum receive power level, the received power per active voice user can be found from knowledge of the required signal to noise ratio as is well known in the art. Multiplying this by the number of voice users supported and their voice activity factor gives an estimate of the receive power caused by the voice users. Other circuit switched services (e.g. video streaming) can be considered in a similar way.

The choice of the maximum receive power level affects the performance of the scheduling. A suitable value is to choose this level as approximately 4-6 dB higher than the thermal noise. Empirically this creates a suitable margin to allow for the fluctuations in received power arising from the binomial statistics governing the number of simultaneous transmitters of circuit users (who cannot be scheduled, they transmit when they need to and the scheduler is ignorant of when these transmissions occur), and for imperfect power control. Depending on the statistics of the traffic (circuit vs packet, for example), a higher maximum receive power level is likely to be possible. In practise the maximum receive power level may be determined empirically or by accurate simulation of a network.

In step 309 it is determined whether all packets of the list have been considered. If not the scheduler continues at step 303 by selecting a new packet and otherwise the scheduler proceeds at step 311. Alternatively the loop may be terminated by another criterion such as a real time constraint for the scheduling process.

In step 311 the information on which packets have been scheduled is communicated to the base stations of the cluster which communicates the information to the remote terminals.

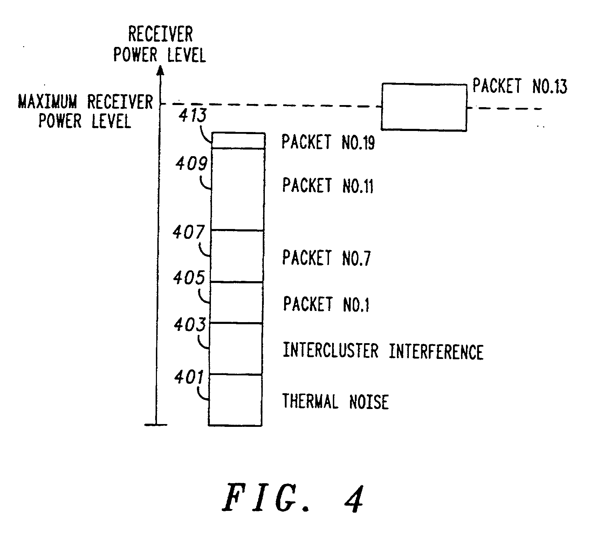

FIG. 4 illustrates the principle of the described embodiment of the scheduler. A maximum receive power level is determined for each cell. An accumulated receive power level is calculated as the sum of the thermal noise level 401 and the intercluster interference level 403. If the system also supports circuit switched users the interference caused by these is calculated an added. The increase in receive power level by allocating Packet #1 405 is calculated an added to the accumulated receive power level. As the accumulated receive power level does not exceed the maximum receive power level the packet is scheduled and the increase in receive power level is included in the accumulated receive power level. The procedure is repeated for packet #7 and #11. For packet #13 the increase in receive power level 411 is so high that adding it to the accumulated receive power level results in the maximum receive power level being exceeded and the packet is therefore not scheduled and nor is the increase in receive power level added to the maximum receive power level. The increase in receive power level 413 caused by packet #19 is however calculated to not result in the maximum receive power level, and this packet is scheduled. Other packets (e.g packet number ~2,3,4,5,6,8,9,10,12,14,15,16,17 and 18) are transmitted by remote terminals sufficiently distant from the current base station to have only a negligible effect on this and they are therefore ignored.

The impact of transmitting a packet is calculated to a number of base stations. Each packet will thus have a power profile reflecting how it impacts different base stations. In an embodiment of the invention the packets may be divided into different sub-lists in response to the pattern of increased receive power level associated with each packet. In this case the packets selected for scheduling are selected from the sub-lists in response to the receive power profile of the packet.

In the example presented the scheduler is located in the Node B controller but in principle the scheduler can in principle be situated anywhere in the communication system or can be distributed over a plurality of components in the network.

The scheduler is typically implemented as a software program running on a suitable processor such as a microprocessor or a digital signal processor.

The scheduler described has a number of advantages including high resource utilisation (the fraction of the available resource which is exploited by the scheduler whilst meeting the agreed quality of service for the supported circuit and packet connections) or capacity, resulting from the accurate handling of intercell interference, low complexity of operation, and robustness (the schedule generated meets the signal to noise requirements of every packet scheduled under averaged fading conditions).

## Claims

1. A packet scheduler for a Code Division Multiple Access cellular communication system having a number of cells each cell having a base station and at least one remote terminal, the scheduler comprising:

   means for maintaining a list of packets for a cluster of cells;
   means for calculating an increase in receive power level at a target base station and at other base stations caused by transmitting a packet; and

means for scheduling packets to a base station so that only packets which do not result in an accumulated receive power level exceeding a maximum receive power level at said target base station and at said other base stations are scheduled.

2. A packet scheduler as claimed in claim 1 wherein the means for calculating an increase in receive power level at base stations includes means for calculating the received power from the remote terminal from the required signal to noise ratio for the packet, the maximum receive power level and the path loss from the remote terminal to the target base station.

3. A packet scheduler as claimed in claim 2 wherein the means for calculating an increase in receive power level at base stations includes means for calculating the received power from the remote terminal as

$$P_{RECEIVE} = \frac{L}{L_B} \cdot P_{MAX} \cdot \frac{SNR}{1 + SNR}$$

where $P_{RECEIVE}$ is the received power level at the base station, L is the pathloss between the remote terminal and the target base station, $L_B$ is the pathloss between the remote terminal and the base station, $P_{MAx}$ is the maximum receive power level and SNR is the required signal to noise ratio for the packet.

4. A packet scheduler as claimed in claim 1 wherein the maximum receive power level includes a contribution from the noise generated by the base station receiver.

5. A packet scheduler as claimed in claim 1 wherein the maximum receive power level includes a contribution from the interference caused by circuit switched voice traffic.

6. A packet scheduler as claimed in claim 1 wherein the maximum receive power level includes a contribution from remote terminals served by cells not included in the cluster.

7. A packet scheduler as claimed in claim 1 wherein packets are sequentially allocated in an order of priority.

8. A packet scheduler as claimed in claim 7 wherein the list of packets is divided into a plurality of sub-lists in response to the pattern of increased receive power level associated with each packet; and packets for scheduling are selected from a sub-list in response to the pattern of increased receive power level of that sub-list.

9. A method of scheduling packets in a Code Division Multiple Access cellular communication system having a number of cells each cell having a base station and at least one remote terminal, the method comprising the steps of:

maintaining a list of packets for a cluster of cells;
calculating an increase in receive power level at a target base station and at other base stations caused by transmitting a packet; and
scheduling packets to a base station so that only packets which do not result in an accumulated receive power level exceeding a maximum receive power level at said target base station and at said other base stations are scheduled.

**Patentansprüche**

1. Paketplaner für ein zellulares CDMA-Kommunikationssystem, das eine Reihe von Zellen aufweist, wobei jede Zelle eine Basisstation und mindestens ein entferntes Endgerät aufweist, wobei der Planer Folgendes umfasst:

Mittel zum Aufrechterhalten einer Liste von Paketen für einen Cluster von Zellen;
Mittel zum Berechnen eines Anstieges im Empfangsleistungspegel an einer Zielbasisstation und an anderen Basisstationen, der durch das Übertragen eines Paketes verursacht wird; und
Mittel zum Planen von Paketen an eine Basisstation, so dass nur Pakete geplant werden, die nicht zu einem akkumulierten Empfangsleistungspegel führen, der einen maximalen Empfangsleistungspegel an der Zielbasisstation und an den anderen Basisstationen übersteigt.

2. Paketplaner nach Anspruch 1, bei dem die Mittel zum Berechnen eines Anstieges im Empfangsleistungspegel an Basisstationen Mittel zum Berechnen der empfangenen Leistung von dem entfernten Endgerät aus dem erforderlichen Signal-Rausch-Verhältnis für das Paket, des maximalen Empfangsleistungspegels und des Pfadverlustes von dem entfernten Endgerät zu der Zielbasisstation umfassen.

3. Paketplaner nach Anspruch 2, bei dem die Mittel zum Berechnen eines Anstieges im Empfangsleistungspegel an Basisstationen Mittel zum Berechnen der empfangenen Leistung von dem entfernten Endgerät umfassen, als

$$P_{RECEIVE} = \frac{L}{L_B} \cdot P_{MAX} \cdot \frac{SNR}{1 + SNR}$$

wo $P_{RECEIVE}$ der empfangene Leistungspegel an der Basisstation ist, L der Pfadverlust zwischen dem entfernten Endgerät und der Zielbasisstation ist, $L_B$ der Pfadverlust zwischen dem entfernten Endgerät und der Basisstation ist, $P_{MAX}$ der maximale Empfangsleistungspegel ist und SNR das erforderliche Signal-Rausch-Verhältnis für das Paket ist.

4. Paketplaner nach Anspruch 1, bei dem der maximale Empfangsleistungspegel einen Beitrag von dem durch den Basisstationsempfänger erzeugten Rauschen umfasst.

5. Paketplaner nach Anspruch 1, bei dem der maximale Empfangsleistungspegel einen Beitrag aus der Interferenz umfasst, die durch den durchschaltevermittelten Sprachverkehr verursacht wird.

6. Paketplaner nach Anspruch 1, bei dem der maximale Empfangsleistungspegel einen Beitrag von entfernten Endgeräten umfasst, die durch Zellen versorgt werden, die nicht in dem Cluster enthalten sind.

7. Paketplaner nach Anspruch 1, bei dem die Pakete nacheinander in einer Prioritätsreihenfolge zugeteilt werden.

8. Paketplaner nach Anspruch 7, bei dem die Liste der Pakete in Reaktion auf das jedem Paket zugeordnete Muster des angestiegenen Empfangsleistungspegels in eine Vielzahl von Sublisten unterteilt wird; und Pakete zum Planen aus einer Subliste in Reaktion auf das Muster des angestiegenen Empfangsleistungspegels dieser Subliste ausgewählt werden.

9. Verfahren zum Planen von Paketen in einem zellularen CDMA-Kommunikationssystem, das eine Reihe von Zellen aufweist, wobei jede Zelle eine Basisstation und mindestens ein entferntes Endgerät aufweist, wobei das Verfahren die folgenden Schritte umfasst:

   Aufrechterhalten einer Liste von Paketen für einen Cluster von Zellen;
   Berechnen eines Anstieges im Empfangsleistungspegel an einer Zielbasisstation und an anderen Basisstationen, der durch das Übertragen eines Paketes verursacht wird; und
   Planen von Paketen an eine Basisstation, so dass nur Pakete geplant werden, die nicht zu einem akkumulierten Empfangsleistungspegel führen, der einen maximalen Empfangsleistungspegel an der Zielbasisstation und an den anderen Basisstationen übersteigt.

**Revendications**

1. Programmateur de paquets pour un système de communication cellulaire à accès multiple par différence de code ayant un certain nombre de cellules chaque cellule ayant une station de base et au moins un terminal à distance, le programmateur comprenant :

   un moyen pour mettre à jour une liste de paquets pour une grappe de cellules ;
   un moyen pour calculer une augmentation de niveau de puissance reçue à une station de base destinataire et à d'autres stations de base provoquée par la transmission d'un paquet ; et
   un moyen pour programmer des paquets à une station de base de façon que seuls les paquets qui n'ont pas comme conséquence qu'un niveau de puissance reçue cumulé dépasse un niveau de puissance reçue maximum à ladite station de base destinataire et auxdites autres stations de base.

**2.** Programmateur de paquets selon la revendication 1, dans lequel le moyen pour calculer une augmentation de niveau de puissance reçue à des stations de base comprend un moyen pour calculer la puissance reçue provenant du terminal à distance à partir du rapport signat / bruit exigé pour le paquet, du niveau de puissance reçue maximum et des pertes en ligne du terminal à distance à la station de base destinataire.

**3.** Programmateur de paquets selon la revendication 2, dans lequel le moyen pour calculer une augmentation de niveau de puissance reçue à des stations de base comprend un moyen pour calculer la puissance reçue en provenance du terminal à distance sous la forme

$$P_{RECEIVE} = \frac{L}{L_B} \cdot P_{MAX} \cdot \frac{SNR}{1+ SNR}$$

où $P_{RECEIVE}$ est le niveau de puissance reçu à la station de base, L représente les pertes en ligne entre le terminal à distance et la station de base destinataire, $L_B$ représente les pertes en ligne entre le terminal à distance et la station de base, $P_{MAX}$ est le niveau de puissance reçue maximum et SNR est le rapport signal / bruit exigé pour le paquet

**4.** Programmateur de paquets selon la revendication 1 dans lequel le niveau de puissance reçue maximum comprend une contribution provenant du bruit généré par le récepteur de station de base.

**5.** Programmateur de paquets selon la revendication 1 dans lequel le niveau de puissance reçue maximum comprend une contribution de l'interférence provoquée par le trafic vocal à commutation de circuits.

**6.** Programmateur de paquets selon la revendication 1 dans lequel le niveau de puissance reçue maximum comprend une contribution de terminaux à distance desservis par des cellules non comprises dans la grappe.

**7.** Programmateur de paquets selon la revendication 1 dans lequel des paquets sont alloués de façon séquentielle suivant un ordre de priorité.

**8.** Programmateur de paquets selon la revendication 7 dans lequel la liste de paquets est divisée en une pluralité de sous-listes en réponse à la configuration de niveau de puissance reçue augmenté associée à chaque paquet ; et des paquets à programmer sont choisis dans une sous-liste en réponse à la configuration de niveau de puissance reçue augmenté de cette sous-liste.

**9.** Procédé de programmation de paquets dans un système de communication cellulaire à accès multiple par différence de code ayant un certain nombre de cellules chaque cellule ayant une station de base et au moins un terminal à distance, le procédé comprenant les opérations consistant à :

mettre à jour une liste de paquets pour une grappe de cellules ;
calculer une augmentation de niveau de puissance reçue à une station de base destinataire et à d'autres stations de base provoquée par la transmission d'un paquet ; et
programmer des paquets à une station de base de façon que seuls les paquets qui n'ont pas comme conséquence qu'un niveau de puissance reçue cumulé dépasse un niveau de puissance reçue maximum à ladite station de base destinataire et auxdites autres stations de base.

FIG. 1

BUILD LIST OF PACKETS — 301

CHOOSE PACKET — 303

CALCULATE INCREASE IN RECEIVE POWER LEVEL — 305

SCHEDULE PACKET IF OK — 307

309

MORE PACKETS ?

YES

NO

COMMUNICATE SCHEDULING — 311

FIG. 3

FIG. 2

*FIG. 4*